Europäisches Patentamt

European Patent Office

Office européen des brevets

(19)

(11) Publication number: **0 052 872**
A2

(12) **EUROPEAN PATENT APPLICATION**

(21) Application number: 81109803.7

(22) Date of filing: 20.11.81

(51) Int. Cl.³: **C 08 L 27/06**

(30) Priority: 20.11.80 US 208898

(43) Date of publication of application:
02.06.82 Bulletin 82/22

(84) Designated Contracting States:
BE DE FR GB IT NL SE

(71) Applicant: STAUFFER CHEMICAL COMPANY

Westport Connecticut 06880(US)

(72) Inventor: Kraft, Paul
6 Imperial Lane
South Spring Valley, NY 10977(US)

(74) Representative: Jaeger, Klaus Dr. et al,
JAEGER & PARTNER Patentanwälte Bergstrasse 48 1/2
D-8035 München-Gauting(DE)

(54) Blends of vinyl chloride polymer and graft copolymer composition.

(57) The present invention relates to blends of: (1) a vinyl chloride polymer; and (2) a thermoplastic graft copolymer composition comprising (a) a resinous polymer of monoethylenically unsaturated, non-chlorinated, resin-forming material and (b) a rubbery polymer of two different linear alpha-monoolefins, one of which is preferably ethylene and the other of which is a higher alpha-monoolefin having 3 to 16 carbon atoms, and a copolymerizable non-conjugated diene.

EP 0 052 872 A2

BLENDS OF VINYL CHLORIDE
POLYMER AND GRAFT COPOLYMER COMPOSITION

Background of the Invention

Field of the Invention

The present invention relates to impact resistant blends of a vinyl chloride polymer and a thermoplastic graft copolymer composition.

Description of the Prior Art

The type of thermoplastic graft copolymer composition which is admixed with vinyl chloride polymer to form the blends of the present invention is a known impact resistant material. It comprises a blend of (a) a relatively hard, resinous polymer of a monoethylenically unsaturated, non-chlorinated, resin-forming material, e.g., a styrene-acrylonitrile resin; and (b) a relatively soft, rubbery polymer of two different linear alphamonoolefins, one of which is preferably ethylene and the other of which is a higher alpha-monoolefin having 3 to 16 carbon atoms, and a copolymerizable non-conjugated diene. Recently issued U.S. Patent No. 4,202,948 to W. J. Peascoe describes such a resin composition in more detail. These materials have recently been described as useful either alone or coextruded as a protective outer layer over a lower cost, non-weatherable substrate such as ABS resin, Plastics Engineering, March 1980, p. 69. They have not been advocated as additives for vinyl chloride polymers.

C-6101

It is known to use the above-described type of two-component thermoplastic graft copolymer composition as an impact modifier in certain polymer compositions other than vinyl chloride polymer compositions. For example, U.S. Patent No. 3,959,211 shows polyphenylene ether resins in combination with such compositions, and British Patent No. 1,543,146 shows polycarbonate resins modified by the composition.

It is also known to blend vinyl chloride polymers with only the rubbery polymer component used in the thermoplastic graft copolymer composition. Examples of such two-component blends are described in the following prior art references: British Patent Nos. 1,508,955 and 1,545,249; Japanese Kokai No. 74 03 949; Ger. Offen. No. 2,616,375; and J. C. Falk et al., Angew. Makromol. Chem. 57(1), 77-86 (1977).

Ternary blends of vinyl chloride polymer, a chlorinated olefin, and the rubbery polymer component of the thermoplastic graft copolymer composition are shown in U.S. Patent No. 4,054,615.

Finally, ternary blends of a vinyl chloride polymer, a graft polymer of vinyl chloride and ethylenevinyl acetate, and the rubbery polymer component of the thermoplastic graft copolymer compositions are shown in German Offen. No. 2,534,013.

Summary of the Present Invention

The blends of the present invention comprise (1) a vinyl chloride polymer; and (2) a thermoplastic graft copolymer composition comprising: (a) a relatively hard, resinous polymer of monoethylenically unsaturated,

C-6101

non-chlorinated, resin forming material; and (b) a relatively soft, rubbery polymer of two different linear alpha-monoolefins, one of which is preferably ethylene and the other of which is a higher alpha-monoolefin having 3-16 carbon atoms, and a copolymerizable non-conjugated diene which is grafted with a resinous polymer of monoethylenically unsaturated resin-forming material. A preferred rubbery polymer component is an ethylene-propylene-5-ethylidene-2-norbornene elastomer grafted with a mixture of styrene and acrylonitrile, and a preferred resinous polymer component is styrene-acrylonitrile.

Description of Preferred Embodiments

The term "vinyl chloride polymer", for purposes of the present invention, is defined as including both the homo- and copolymers of vinyl chloride. The term also is used to refer to chlorinated vinyl chloride polymers which generally have a chlorine content of from about 56% to about 70%, by weight. The preferred polymer is the homopolymer of vinyl chloride, but the vinyl chloride polymer can also contain up to about 50%, by weight, of other ethylenically unsaturated compounds which are copolymerizable with vinyl chloride monomer. Representative ethylenically unsaturated comonomers include: the vinyl alkanoates, such as vinyl acetate, vinyl propionate, and the like; the vinylidene halides, such as vinylidene bromide, vinylidene chloride, vinylidene fluorochloride, and the like; unsaturated hydrocarbons, such as ethylene, propylene, and isobutylene; halogenated hydrocarbons, such as chlorinated ethylene, and the like; and the

C-6101

allyl compounds, such as allyl acetate, allyl chloride, allyl ethyl ether, and the like.

The two-component thermoplastic graft copolymer composition used in the blends of the present invention is described in U.S. Patent No. 4,202,948 to W. J. Peascoe. It comprises:

(a) a resinous polymer of monoethylenically unsaturated, non-chlorinated, resin-forming monomeric material; and

(b) a rubbery polymer of two different linear alpha-monoolefins, one of which is preferably ethylene and the other of which is a higher alpha-monoolefin having 3 to 16 carbon atoms, and a copolymerizable non-conjugated diene. The rubbery polymer (b) preferably has a Mooney viscosity (ASTM D1646) of at least about 55 ML-4 at about 125°C. and an iodine number of at least about 15. The weight ratio of the resin component (a) to the rubbery component (b) can range from about 95/5 to about 30/70, and, preferably, at least about 2%, by weight, of the resin component (a) present in the composition was formed in situ in the presence of the rubbery component (b). If desired, all of the resin component (a) present in the composition can have been formed in situ in the presence of the rubbery component (b). More usually, from about 2% to about 60%, by weight, of the resin component (a) present in the composition is formed in situ in the presence of the rubbery component (b), and the remaining 98% to 40% by weight of the resin component (a) is formed separately in the absence of the rubbery component (b).

The resins suitable for use in forming the resinous polymer (a) of the graft copolymer include the relatively hard or rigid homopolymers and copolymers of monoethylenically unsaturated, non-chlorinated, monomers such as styrene, the substituted styrenes, $\alpha$-methylstyrene, paramethylstyrene, acrylonitrile, methacrylonitrile, acrylic acid, methacrylic acid, maleic anhydride, the lower (1-8 carbon atoms) alkyl esters of acrylic acid and methacrylic acid, and the like. Resins of particular interest are polystyrene, polymethyl methacrylate, copolymers of styrene-acrylonitrile, styrene-methyl methacrylate, styrene-methacrylic acid, similar copolymers of alpha-methylstyrene, and copolymers of styrene-alpha-methylstyrene, and the like. These resins and methods for their preparation are well known.

The relatively soft, rubbery graft copolymers forming component (b) of the graft copolymer are those made by graft polymerizing a resin-forming, monoethylenically unsaturated monomer or a mixture of monomers onto a rubbery copolymer. The preferred rubber copolymers include the high Mooney (e.g., up to 120 or more ML-4 at 125°C.) copolymers of at least two different straight-chain alpha-monoolefins such as ethylene, propylene, butene-1, octene-1, and the like, with at least one other copolymerizable monomer, usually a diene, typically a non-conjugated diene. Preferably, one of the alpha-monoolefins is ethylene along with another higher alpha-monoolefin. The weight ratio of the lower alpha-monoolefin to the higher alpha-monoolefin in the rubbery terpolymer is ordinarily within the range of from about 20/80 to about 80/20. Particularly preferred copolymers are the ethylene-propylene-non-conjugated diene ternary copolymers in which the non-conjugated diene is 5-methylene-2-norbornene, 5-ethylidene-2-norbornene, 5-isopropylidene-2-norbornene, and the like. The amount of the diene preferably is such that the iodine number of the rubbery terpolymer is in the range of from about 15 to about 40, preferably about 20 to about 35, which corresponds to about 7 to about 20 weight percent, preferably about 9 to about 17 weight percent, of diene monomer units in the rubbery terpolymer. Examples of graft copolymerization methods suitable for use herein are described in U.S. Patent Nos. 3,489,822; 3,642,950; and 3,849,518 and Japanese Patent No. 48/32189, the disclosures of which are incorporated herein by reference.

In the graft copolymerization process not all of the resin-forming monomer actually becomes grafted onto the rubber spine. Some of the monomer simply forms free resin in situ, which is present in mixture with the true graft polymer. The amount of grafted-on monomer in the graft polymerization product may be determined by extracting the product with a solvent for the ungrafted resin (e.g., acetone). The extracted resin (free resin) subtracted from the total resin gives the grafted resin. The weight ratio of grafted resin to rubbery spine in the intended product will ordinarily be at least about 0.2. Frequently, the rubbery spine used in making the graft copolymer is a copolymer of ethylene, at least one alpha-monoolefin containing 3 to 16 carbon atoms and at least one copolymerizable polyene, especially a non-conjugated diene, whether aliphatic, as in 1,4-hexadiene, or, preferably, bridged ring cyclic, as in dicyclopentadiene, bicyclo (2.2.1) hepta-2,5-diene, and the alkylidene norbornenes, especially the 5-alkylidene-2-

C-6101

norbornenes, wherein the alkylidene group contains 1-10 carbon atoms, as disclosed in the references referred to above.

The monoethylenically unsaturated monomer or mixture of monomers that may be used for grafting onto the rubbery polymer component of the thermoplastic graft copolymer used in the present blends may or may not be the same as that used in making the hard, rigid resinous homopolymers or copolymers that constitute the resinous proportion of the thermoplastic graft copolymers. In preparing the graft, the ratio by weight of monomers to rubber will ordinarily range from about 60/40 to about 30/70. Preferably, the amount of resin-forming monomeric material used in making the graft is from about 40% to about 60% based on the weight of monomeric material plus rubbery spine. Most preferably the weight ratio of resin-forming monomers to rubbery spine in making the graft copolymer is about 50/50, since an advantageous combination of properties in the final blend, including particularly impact strength, is obtainable at about that ratio.

In certain preferred products, the same resin-forming monomers are used in preparing the graft copolymer as in the separately prepared resin. The amount of separately prepared resinous polymer or copolymer in the blend is usually at least about 50% by weight of the resinous polymer or copolymer in the final blend.

In one aspect, the graft copolymer used in the blends of the present invention are mixtures of resinous polymers or copolymers and rubbery graft copolymers which have been separately prepared by conventional methods and in which the overall final ratio of resin to rubber in the blends ranges from about 95/5 to about 62/38, with a preferred range of about 80/20 to about 75/25.

The most preferred graft copolymer additive for use in the present invention are those in which the resinous component is a styrene-acrylonitrile resin, usually having a styrene:acrylonitrile weight ratio of from about 80/20 to about 65/35, preferably about 70/30 to about 75/25, and the rubbery component is an ethylene-propylene-5-ethylidene-2-norbornene elastomer grafted with a mixture of styrene and acrylonitrile (in ratios as stated for the copolymer resin). Graft copolymer additives of this type are commercially available under the trademark ROVEL from Uniroyal, Inc.

The blends of the present invention are formed by mixing (1) vinyl chloride polymer and (2) the thermoplastic graft copolymer composition described above at a suitable temperature (e.g., about 180°C. to about 200°C.) for a sufficient length of time in a suitable mixing or blending apparatus until a blend of the desired homogeneity is obtained. Examples of suitable mixing apparatus include two roll mills, Banbury mills, single or multiple screw extruders, and the like.

The blends of the present invention can have a weight ratio of vinyl chloride polymer to thermoplastic graft copolymer of from about 40:60 to about 90:10, preferably from about 40:60 to about 80:20. Useful, impact resistant articles (such as house siding) can then be formed from the blends of the present invention using such conventional processing operations as injection molding, extrusion, compression molding, rotational molding, and the like. The blends can contain desired functional additives, as necessary, including lubricants, stabilizers, fillers, colorants, anti-oxidants, flame retardants, and the like.

The following Examples further illustrate the present invention.

C-6101

- 10 -

EXAMPLE 1

This Example illustrates certain of the important physical properties of a blend of vinyl chloride polymer and one of two commercially available thermoplastic graft polymer compositions comprising a styrene-acrylonitrile resin compounded with a styrene-acrylonitrile grafted olefinic rubber (available under the trademarks ROVEL 401 and ROVEL 701 from Uniroyal, Inc.)

The blends were formed by mixing 60%, by weight, of the above-mentioned commercially available thermoplastic graft polymer compositions and 40%, by weight, of vinyl chloride homopolymer resin (SCC-676 brand from Stauffer Chemical Company) at 187.7°C. in a FARRELL brand two-roll, oil heated mill until homogeneous. Test plaques were then formed at 187.7°C. by compression molding, and the blends were tested as described below:

| | | Physical Property Data | |
| Composition | (°C.) | Izod Impact*<br>(J/m) | Tensile Impact*<br>(J/cm$^2$) |
|---|---|---|---|
| 60% ROVEL 401<br>brand/40% PVC | 76 | 603.3<br>± 32.0 | 9.66<br>± 2.1 |
| 60% ROVEL 701<br>brand/40% PVC | 76 | 603.3<br>± 283 | 10.51<br>± 3.03 |
| 100% ROVEL 401<br>brand (Control) | 83 | 544.6<br>± 64.1 | 10.51<br>± 1.98 |
| 100% PVC<br>(Control) | 67 | 48.1<br>± 5.3 | 10.08<br>± 2.1 |

*based on ten specimens with 95% confidence limits.

C-6101

| Composition | Tensile Yield* (kg/cm²) | Elong. at Break* (%) | Elastic Modulus* (Kg/cm²) |
|---|---|---|---|
| 60% ROVEL 401 brand/40% PVC | 445.8 ± 9.70 | 49 ± 3.18 | 13,640.1 ± 422 |
| 60% ROVEL 701 brand/40% PVC | 454.9 ± 7.52 | 49 ± 2.86 | 13,358.9 ± 844 |
| 100% ROVEL 401 brand (Control) | 310.8 ± 2.32 | 38 ± 0.60 | 10,687.1 ± 844 |
| 100% PVC (Control) | 521.9 ± 4.99 | 65 ± 0.13 | 13,779.8 ± 352 |

* based on five specimens with 95% confidence limits.

These data illustrate the improved tensile and impact resistance values for the blend as compared to the tensile and impact resistance values for the polyvinyl chloride resin.

EXAMPLE 2

This Example illustrates the formation of other blends in accordance with the present invention according to the procedure of Example 1 and the average physical property test results that were obtained.

| Composition | Physical Property Data | |
| --- | --- | --- |
| | Izod Impact* (J/m) | Tensile Impact* (J/cm$^2$) |
| 20% ROVEL 401 brand/80% PVC | 80 ± 10 | 9.92 ± 6.2 |
| 20% ROVEL 701 brand/80% PVC | 91 ± 5.3 | 7.40 ± 2.8 |
| 10% ROVEL 401 brand/90% PVC | 128 ± 37 | 21.0 ±15 |
| 10% ROVEL 701 brand/90% PVC | 53 ± 16 | 12.4 ±11 |
| 100% PVC (Control) | 48 ± 5.3 | 9.98 ± 9.4 |

* based on ten specimens with 95% confidence limits.

- 13 -

The foregoing Examples are deemed to be merely illustrative of the claimed invention and should not be construed in a limiting sense. The scope of protection that is sought is set forth in the claims which follow.

C-6101

What is Claimed:

1. A blend of:

    (1) a vinyl chloride polymer; and

    (2) an effective amount for impact improvement of a thermoplastic graft copolymer comprising a blend of: (a) a relatively hard, resinous polymer of monoethylenically unsaturated, non-chlorinated, resin-forming material; and (b) a relatively soft, rubbery polymer of two different linear alpha-monoolefins and a copolymerizable non-conjugated diene.

2. A blend as claimed in Claim 1 wherein the weight ratio of (1) to (2) is from about 40:60 to about 90:10.

3. A blend as claimed in Claim 1 wherein the weight ratio of (a) to (b) is from about 95/5 to about 30/70.

4. A blend as claimed in either Claim 1, 2 or 3 wherein the resinous polymer is a polymer of styrene and acrylonitrile.

5. A blend as claimed in either Claim 1, 2 or 3 wherein the rubbery polymer is a polymer of ethylene, a $C_3$-$C_{16}$ alpha monoolefin, and an alkylidene norbornene.

6. A blend as claimed in either Claim 1, 2 or 3 wherein the resinous polymer is a polymer of styrene and acrylonitrile, and the rubbery polymer is an ethylene-propylene-5-ethylidene-2-norbornene elastomer grafted with a mixture of styrene and acrylonitrile.

7. A blend as claimed in Claim 1 wherein the weight ratio of (1) to (2) is from 40:60 to 90:10, the weight ratio of (a) to (b) is from 95/5 to about 30/70, the resinous polymer is a polymer of styrene and acrylonitrile, and the rubbery polymer is a polymer of ethylene, a $C_3$-$C_{16}$ alpha monoolefin, and an alkylidene norbornene.

C-6101